Europäisches Patentamt

(19) European Patent Office

Office européen des brevets

(11) **EP 0 766 449 A2**

## (12) EUROPEAN PATENT APPLICATION

(43) Date of publication:
02.04.1997 Bulletin 1997/14

(51) Int. Cl.⁶: **H04N 1/00**

(21) Application number: 96202539.1

(22) Date of filing: 11.09.1996

(84) Designated Contracting States:
DE FR GB

(30) Priority: 28.09.1995 US 4404
29.01.1996 US 593772

(71) Applicant: **EASTMAN KODAK COMPANY**
**Rochester, New York 14650 (US)**

(72) Inventors:
- **Schildkraut, Jay Stuart,**
  **c/o Eastman Kodak Co.**
  **Rochester, New York 14650-2201 (US)**

- **Sutton, James Edward,**
  **c/o Eastman Kodak Co.**
  **Rochester, New York 14650-2201 (US)**
- **Liu, Hsue-Yang,**
  **c/o Eastman Kodak Co.**
  **Rochester, New York 14650-2201 (US)**
- **Gray, Robert Terry,**
  **c/o Eastman Kodak Co.**
  **Rochester, New York 14650-2201 (US)**

(74) Representative: **Wagner, Karl H., Dipl.-Ing.**
**WAGNER & GEYER**
**Patentanwälte**
**Gewürzmühlstrasse 5**
**80538 München (DE)**

### (54) Copy protection system

(57)    A method for determining the presence of a color symbol on a document with the determination being usable in a copy system for controlling the copying of the document, comprising the steps of:

a) incorporating a color symbol having a selected color in a document that is not to be copied;
b) computing the selected color content of the document; and
c) determining the presence of the color symbol on a document by the amount of the selected color content on the document.

FIG. 1

EP 0 766 449 A2

## Description

### Copyright Protection

A portion of the disclosure of this patent document contains material which is subject to copyright protection. The copyright owner has no objection t the facsimile reproduction by any one of the patent disclosure, as it appears in the Patent and Trademark Office patent files or records, but otherwise reserves all copyright rights whatsoever.

### Field of The Invention

The invention relates generally to the field of copy protection, and in particular to a technique for controlling the copying of copyrighted material.

### Background Of The Invention

Presently photographic prints may be copied with a digital print station without the permission of the copyright holder. A technique is needed to electronically recognize a print that is copyrighted so as to control the making of copies.

The present technique arose from the need of professional portrait and wedding photographers to protect their copyrighted prints from illegal duplication by a digital print station.

### Summary Of The Invention

The present invention is directed to overcoming one or more of the problems set forth above. Briefly summarized, according to one aspect of the present invention, the placement of a symbol on a photographic print that can be electronically recognized on the basis of its color and/or shape by a digital print station to inhibit copying by the digital print station is provided. If the symbol is found on the print the print station will not make a copy. The present invention provides a method for determining the presence of a color symbol on a document with the determination being usable in a copy system for controlling the copying of the document, comprising the steps of:

a) incorporating a color symbol having a selected color in a document that is not to be copied;
b) computing the selected color content of the document; and
c) determining the presence of the color symbol on a document by the amount of the selected color content on the document.

The above and other objects of the present invention will become more apparent when taken in conjunction with the following description and drawings wherein identical reference numerals have been used, where possible, to designate identical elements that are common to the figures.

### Advantageous Effect Of The Invention

This technique of copy protection has several positive features. The presence of the symbol reminds the owner of the photographic print that it is copyrighted and that they are not free to make additional copies without the permission of the copyright holder. Also, the technique is automatic and the cost of its implementation is low for both the photographer and the manufacturer of the digital print station.

### Brief Description Of The Drawings

Fig.1 is a perspective of a photographic print with a copyright notice affixed thereto;

Fig. 2 is a block diagram of a digital print station on which the present invention is implemented;

Fig. 3 illustrates regions corresponding to the shape of a copyright symbol;

Fig. 4 is a bit map that is related to the regions illustrated in Fig. 3; and

Fig. 5 is a perspective view of a stamp for impressing a color foil copyright symbol onto a photographic print.

## Detailed Description Of The Invention

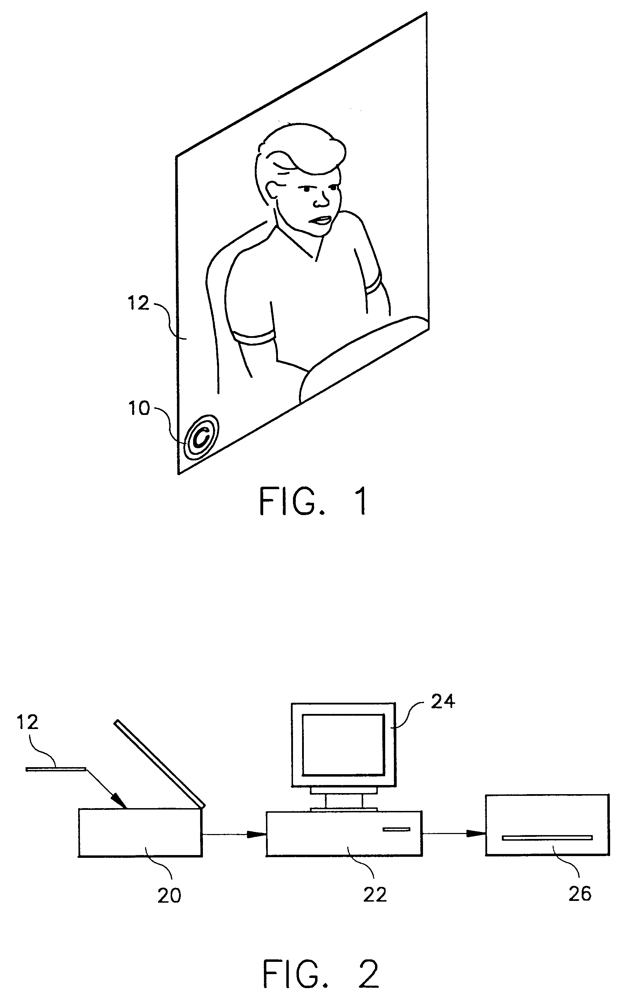

Referring to Fig. 1, the technique of the present invention incorporates a copyright symbol 10 which in one form is a gold colored foil that is affixed to a photographic print 12. The copyright symbol 10 may be affixed to the photographic print 12 by stamping it on, by the use of an adhesive, by the use of a mask during the development process, or by incorporating the copyright symbol within the negative of the photographic print 12 or the paper upon which the photographic print 12 is formed. The copyright symbol 10 may be placed anywhere on the photographic print 12, but the preferred placement is in one of the corners of the photographic print 12 such as the lower left corner of the photographic print 12 as shown. Photographers have expressed a preference for a gold colored copyright symbol, but it is to be understood that other colors are well within the teachings of the present invention.

Referring now to Fig.2, a digital print station, comprised of a scanner 20, a central processor 22 or equivalent PC, a monitor 24, and a printer 26, is a system that has been used to copy photographic prints. In operation, the photographic print 12 is positioned on the scanner 20 for conversion into a digital representation of the photographic print 12. The digitized image is then processed within the central processor 22, under control of an operator, to form the image or images that are viewable on the monitor 24 and printable on paper by the printer 26. Operator control is generally effected using a touch screen overlaying the face of the monitor 24.

The present invention incorporates software that is loaded into the central processor 22 which software operates to determine if the copyright symbol 10 is present in the digital image outputted by the scanner 20. If the copyright symbol 10 is detected the digital print station will refuse to form the print.

Enabling photographers to use this system requires that the form of the copyright symbol 10 be precisely specified.

The detection of the digitized copyright symbol 10 involves three distinct steps. First, each pixel of the digitized photographic image is assigned a "goldness" value that ranges from 0 to 255. A high value of goldness indicates that the color of the pixel is near to the color of the gold colored foil. Next, the digitized photographic image is sectioned into areas that have a predetermined number of pixels of high goldness indicating a possibility that they contain a copyright symbol. This sectioning step increases the speed at which the determination of the existence of a copyright symbol may be made, but is not necessary when speed of computation is not important. Finally, each of these areas are overlaid with a bit map as discussed in detail below.

The first stage of the procedure for assigning goldness values to the digitized image is to convert the digitized image pixel values from the scanner 20 which are generally in a red-green-blue color space to the CIE L*A*B color space. This conversion is implemented using a three dimensional look-up-table (LUT) and trilinear interpolation. Such conversion, by the use of a three dimensional look-up-table, is not shown in the present disclosure for purposes of simplicity, but is well known in the art. Next, a goldness metric that indicates how close the color of the pixel is to the color of the gold colored foil is defined by the following:

$$G = 255\text{-}(|L^*\text{-}L_g^*|+|A^*\text{-}A_g^*|+|B^*\text{-}B_g^*|)$$

In the above equation, the subscript $g$ denotes values for the gold colored foil. Negative values of the goldness $G$ are truncated to zero. The transformed image in which pixel values equal goldness is referred to as the digitized image of goldness values.

The most time consuming part in the execution of the total algorithm is in template matching. For this reason it is worthwhile to determine which pixels of the digitized photographic image can potentially be the starting point of a successful template match. This is done by dividing the image into sections corresponding in size to the size of the copyright symbol and determining if the section has enough pixels of high $G$ indicating that the section possibly contains a gold foil symbol. If a section does not have $N$ pixels of goldness $G_s$ then pixels that would serve as the starting point of a template match over this region are excluded from the template matching procedure described below.

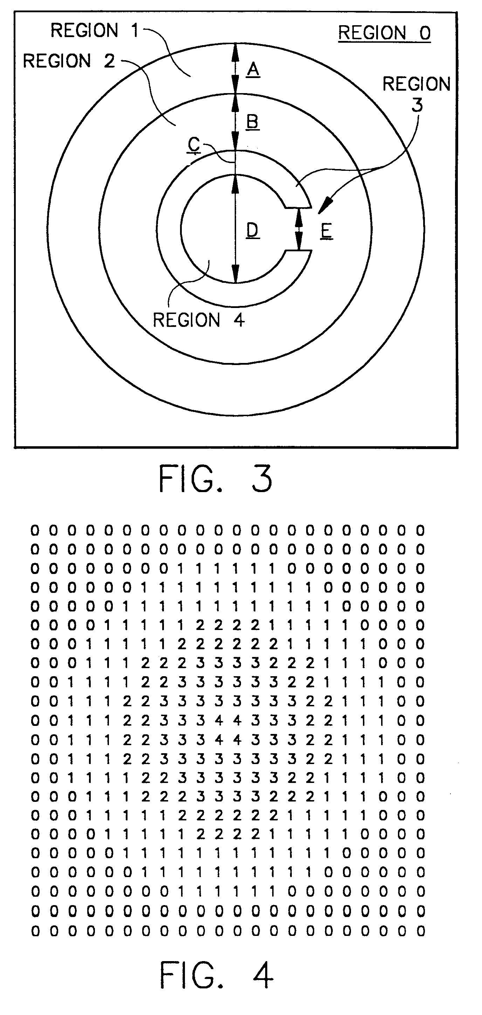

Referring to Fig. 3, in order to determine if the pixels form a copyright symbol we first divide the copyright symbol into five regions labeled 0-4. Region O is outside of the copyright symbol. The outer gold circle of the copyright symbol is labeled region 1. Region 2 is between the gold circle and the gold c. Since we would like to recognize the copyright symbol regardless of its orientation, the gold c is treated as a complete circle so that the template has rotational symmetry. If we had used a "c" in the template it would match very well with a c on the print with the same orientation, but for a c with a different orientation the match would be significantly degraded. Replacing the "c" with a circle prevents a perfect match from ever occurring, but the closeness of the match will not depend on orientation. With this in mind, we define region 3 as the gold c with the gap in the c included. Finally, region 4 is the empty region inside the c.

Fig. 4 is a bit map representing a medium size copyright symbol scanned at 90 dpi. The map represents the regions of the copyright symbol discussed above. For example, region 4 is represented by the number 4 in the bit map. The size of the bit map will track or follow the size of the copyright symbol 10 used on the photograph 12.

The bit map is overlaid on the digitized image of goldness values. This divides the portion of the digitized image of goldness values under the bit map into five regions corresponding to the five regions of the bit map. The methodology of overlaying the bit map may take a number of forms, for example the bit map may be overlaid starting in the upper left hand corner of the digitized image of goldness values and proceeding sequentially either in the vertical or in the horizontal direction such that all portions of the digitized image of goldness values are considered.

The average of goldness values for each of the five regions is determined by identifying the goldness value at each number of the bit map with its corresponding region. For example, the goldness value for the pixel overlaid by the uppermost left bit map number 0 is to be averaged with all of the goldness values that are overlaid by the number 0. In this way, the average goldness value is determined for each of the five regions of the image of goldness values.

The most straight forward method of recognizing the copyright symbol is to determine if regions 1 and 3 have a high average goldness value. This, by itself, is not a robust criteria for two reasons. First, scanners have flare which biases the color of a pixel towards the color of surrounding pixels. For example, gold foil placed in an area of the image with a low value of $G$ will have a lower goldness than if placed in an area with a high $G$ value. Also, when scanned at low resolution (i.e. 90 dpi) an appreciable fraction of the gold pixels lie at the border of the gold lines. The color of these border pixels is an average of the color of the gold foil and the surrounding color. Because of these effects, the average goldness in regions 1 and 3 is strongly dependent on the color of the image at which the symbol is placed.

In order to make the algorithm robust two types of conditions are used to recognize the copyright symbol. The first type of condition is that regions 1 and 3 must have, on average, a goldness value in the range that would be measured by the scanner on a variety of different colored backgrounds. This prevents the error of identifying as a copyright symbol two concentric circles of the right size that are not the color of the gold foil. The second type of condition is that regions 1 and 3 must be of a higher average goldness value than the non-gold colored regions 0, 2, and 4. This is a relative condition that helps to recognize the copyright symbol on a wide range of color backgrounds.

The conditions for the presence of a copyright symbol in the digitized image are as follows:

$$\overline{G}_1 \geq T_1$$

$$\overline{G}_3 \geq T_3$$

$$\overline{G}_1 - \overline{G}_0 \geq T_0$$

$$\overline{G}_1 - \overline{G}_2 \geq T_2$$

$$\overline{G}_3 - \overline{G}_4 \geq T_4$$

where $\overline{G}_i$ is the average goldness of region i and $T_i$ represents a threshold value. The first and second conditions require that regions 1 and 3, respectively, have a reasonable degree of goldness. The last three conditions require that regions 1 and 3 be golder than the surrounding regions of the copyright symbol that do not contain gold foil.

The algorithm incorporated in the present invention was tested using three different sizes of copyright symbols. The dimensions of the copyright symbols in inches are given in Table 1.

The labeling of the columns A-E, in Table 1 corresponds to the like labeled dimensions of the five regions of Fig. 3.

Table 1

|  | Diameter | A | B | C | D | E |
|---|---|---|---|---|---|---|
| Small | .135 | .020 | .015 | .020 | .025 | .005 |
| Medium | .190 | .025 | .030 | .025 | .030 | .010 |
| Large | .245 | .035 | .025 | .035 | .055 | .010 |

In Table 2 we compare for the small, medium, and large copyright symbols the reliability of detection in a photographic image that consists of uniform color patches. Three photographic prints were scanned using an Epson flatbed scanner at a resolution of 90 dpi. The gold foil had $L^*$, $A^*$, and $B^*$ values of 55, 5, and 10, respectively. The thresholds $T_i$ were set as follows $T_0$=20, $T_1$=210, $T_2$=15, $T_3$=210, $T_4$=10. For this test we set $N$ equal to zero so that template matching is performed over the whole image. In this table we show the number of copyright symbols on each of the photographic prints, the number of symbols detected, and the percent detected.

Table 2

| Size | No. Symbols | No. Symbols Found | Percent Symbols Found |
|------|-------------|-------------------|-----------------------|
| Small | 110 | 33 | 30 |
| Medium | 127 | 101 | 80 |
| Large | 114 | 109 | 96 |

The results in Table 2 show that the large copyright symbol is detected with over three times the reliability of the small symbol. The medium symbol, though halfway in size between the small and large symbol, is detected only with 16% less reliability than the large symbol. The medium symbol is a good compromise between the desire to have a small copyright symbol for aesthetic reasons and the need for reliable detection.

In the preceding paragraph we discussed the relative copyright symbol detection efficiency for three different size symbols using identical thresholds. The best possible reliability of detection for a given copyright symbol must be determined by varying the thresholds to optimize the detection rate without causing the algorithm to detect a copyright symbol where there is none. The wrongful detection of a symbol is referred to as a "false positive." Table 3 shows the results of processing fifteen test prints with a medium size copyright symbol. All of the prints were 8 by 10 inches in dimension and were scanned at 90 dpi. The thresholds $T_i$ were set as follows $T_0=20$, $T_1=210$, $T_2=15$, $T_3=210$, $T_4=10$

Table 3

| Print | No. Symbols | No. Symbols Found | No. False Positive s |
|-------|-------------|-------------------|----------------------|
| 1 | 0 | 0 | 0 |
| 2 | 0 | 0 | 0 |
| 3 | 0 | 0 | 0 |
| 4 | 0 | 0 | 0 |
| 5 | 0 | 0 | 0 |
| 6 | 0 | 0 | 0 |
| 7 | 0 | 0 | 0 |
| 7 | 0 | 0 | 0 |
| 8 | 0 | 0 | 0 |
| 9 | 0 | 0 | 0 |
| 10 | 0 | 0 | 0 |
| 11 | 0 | 0 | 0 |
| 12 | 34 | 23 | 0 |
| 13 | 36 | 29 | 0 |
| 14 | 29 | 17 | 0 |
| 15 | 46 | 38 | 0 |

In order to decrease processing time and the chance of false positives the copyright symbol is ideally located at one of the corners of the photographic print. The corners of the whole image are processed, one at a time, until a copyright symbol is found or all four corners have been searched.

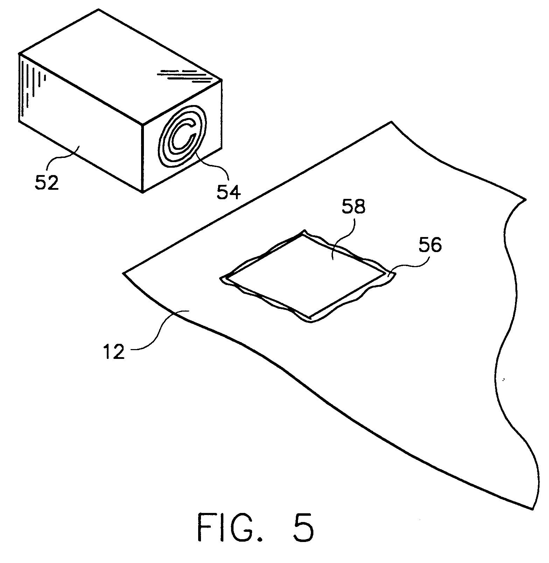

Referring to Fig. 5, a hot foil stamp 52 is provided with a projecting copyright symbol 54. A layer of gold colored foil 56 having a plastic sheet backing 58 is placed over the location on a photographic print 12 that the copyright symbol 10 is to be formed. The projecting copyright mark of the stamp is positioned over the plastic sheet backing 58 and pressure and heat are applied to cause the transfer of the foil, in the shape of the copyright, onto the surface of the photographic print 12.

In the embodiment of the invention that utilizes a gold colored foil 56 to form the copyright symbol, the foil used was PW-1-116, M-632, supplied by Spectrum Foils Inc. of Newark, New Jersey. A hot foil stamp 52 was made by HAP Engraving of New York, New York. The gold colored foil 56 was stamped at a temperature of 250°F.

The following software listing implements the method of the present invention.

```
#include "copyright.h"
#include "util.h"
#include "image.h"
#include "iterator.h"
#include "matrix.h"


long Goldness(Image<unsigned char>& I);
long Candidate(Image<unsigned char>& I);
void Read_LUT(char *Name);
short Match(Image<unsigned char>& I_goldness2,
Image<unsigned char>& Template, short FirstPixel, short
FirstLine);
```

```
static short Sample;
static short C[N][N][N], M[N][N][N], Y[N][N][N];
static short l_target, a_target, b_target, MinGoldPixels,
GoldPixelValue;
static long ZoneCount[MaxZones];
static short ZonePixels[MaxZones],
ZoneGoldness[MaxZones], ZoneSetpoint[MaxZones];
static short TemplateWidth, TemplateHeight;
static short jdebug, jverbose;
static char FileName[80];

short Copyright(unsigned char *InPtr, short ScanPixels,
short ScanLines, short DPI, short All)
{
    short k, p, l, p_end, l_end, MaxCorners;
    short FirstPixel, FirstLine, LastPixel, LastLine;
    short Found, Corner, CornerWidth, CornerHeight;
    long GoldPixels, SymbolsFound, CandidatePixels;
    double f;
    char *TemplateFileName, *ColorFileName, *LUTFileName,
*MarkFileName;
    Image<unsigned char> *I_corner, I_mark;

// Get enviornmental variables.
    jdebug = Debug_Level();
    jverbose = Verbose();

// Setup scanned image.
    Image<unsigned char> I("", InPtr, ScanPixels,
ScanLines, 3);

// All is set to 1 to process the whole image or to 0 to
process only the corners.
    if(All){MaxCorners = 1; f = 1.0;}
    else {MaxCorners = 4; f = 0.25;}

// Image with which to mark position of segmented image
// where copyright symbol was found.
    if(jdebug){
      MarkFileName = getenv("CopyrightMarkFile");
       I_mark.Read_SILIO_File(MarkFileName);
      }

// Set sampling frequency.
    if(DPI == 90) Sample = 1;
    else Sample = DPI / 100;

// Define center box that is excluded from consideration.
    CornerWidth = f * ScanPixels / Sample;
```

```
    CornerHeight = f * ScanLines / Sample;

// Read template image.
    TemplateFileName = getenv("CopyrightTemplateFile");
    Image<unsigned char> Template;
    Template.Read_SILIO_File(TemplateFileName);
    TemplateWidth = Template.Get_NoPixels();
    TemplateHeight = Template.Get_NoLines();

// Find the number of pixels in each zone.
    for(k = 0; k < MaxZones; k++)
       ZonePixels[k] = Template.Pixels_of_Value(k, 1);

// Read color data.
    ColorFileName = getenv("CopyrightColorFile");
    ifstream ColorFile(ColorFileName);
    if(!ColorFile) Error("Copyright()- Color file not
opened.");
    ColorFile >> l_target >> a_target >> b_target >>
MinGoldPixels >> GoldPixelValue;
    for(k = 0; k < MaxZones; k++) ColorFile >>
ZoneSetpoint[k];
    ColorFile.close();

// Read 3-D LUT for RGB to Goldness conversion.
    LUTFileName = getenv("CopyrightLUTFile");
    Read_LUT(LUTFileName);

    if(Verbose()){
       cout << "\n Sampling rate = " << Sample << "\n
MinGoldPixels = " << MinGoldPixels
            << ", GoldPixelValue = " << GoldPixelValue
            << "\n Color file: " << ColorFileName
            << "\n l_target = " << l_target << ", a_target
= " << a_target << ", b_target = " << b_target
            << "\n Template file: " << TemplateFileName
            << "\n Template Pixels = " << setw(5) <<
TemplateWidth
            << ", Template Lines = " << setw(5) <<
TemplateHeight
            << "\n 3D LUT for RGB to Goldness conversion
file: " << LUTFileName;
       for(k = 0; k < MaxZones; k++)
          cout << "\n Zone " << k << ", Pixels = " <<
setw(7) << ZonePixels[k]
                << ", Setpoint = " << setw(7) <<
ZoneSetpoint[k];
       cout << endl;
    }
```

```
    for(Corner = 1; Corner <= MaxCorners; Corner++){

//     Cut out an image from the corner of the scanned
image.
      if(Corner == 1) I_corner = &I.Cut(1, ScanLines -
CornerHeight + 1, CornerWidth, CornerHeight);
      else if(Corner == 2)
         I_corner = &I.Cut(ScanPixels - CornerWidth + 1,
ScanLines - CornerHeight + 1, CornerWidth, CornerHeight);
      else if(Corner == 3) I_corner = &I.Cut(ScanPixels -
CornerWidth + 1, 1, CornerWidth, CornerHeight);
      else if(Corner == 4) I_corner = &I.Cut(1, 1,
CornerWidth, CornerHeight);

      if(jverbose) cout << "\n Corner = " << Corner <<
flush;

//     Convert first band of image into goldness value.
The third band is set to zero.
      GoldPixels = Goldness(*I_corner);
      if(jverbose) cout << "\n Image converted to
goldness."
         << "\n GoldPixels = " << GoldPixels << flush;

//     Set second band to 1 if the pixel is a candidate
for template matching otherwise set to 0.
      CandidatePixels = Candidate(*I_corner);

//     Match template.
      SymbolsFound = 0;
      if(GoldPixels > MinGoldPixels){
         p_end = I_corner->Get_NoPixels() - TemplateWidth
+ 1;
         l_end = I_corner->Get_NoLines() - TemplateHeight
+ 1;

         for(l = 1; l <= l_end; l++){
           for(p = 1; p <= p_end; p++){

             if(*I_corner->Pixel(p,l,3)) Found =
Match(*I_corner, Template, p, l);
             else Found = 0;

             if(jverbose == 2){
                cout << "\n p = " << setw(5) << p << ", l
= " <<  setw(5) << l;
                cout << ", ZoneGoldness = ";
```

```
            for(k = 0; k < MaxZones; k++) cout <<
setw(7) << ZoneGoldness[k] << flush;
               }

            if(Found){
               SymbolsFound++;
               if(jverbose){
                  cout << "\n p = " << setw(5) << p << ",
l = " <<  setw(5) << l;
                  cout << ", ZoneGoldness = ";
                  for(k = 0; k < MaxZones; k++) cout <<
setw(7) << ZoneGoldness[k] << flush;
                  }
               if(jdebug)
                  I_corner->Tile(p - I_mark.Get_NoPixels(),
l - I_mark.Get_NoLines(), I_mark);
               }

            if(!jdebug&&Found){delete I_corner; return
1;}
         }}
      }

    if(jverbose) cout << "\n CandidatePixels = " <<
CandidatePixels
       << ", SymbolsFound = " << SymbolsFound << flush;

    if(jdebug){
       sprintf(FileName, "%s/corner_%d.img", Tmp_Dir(),
Corner);
       I_corner->Write_SILIO_File(FileName, 1);
       }

    delete I_corner;

  } // next corner

  return 0;
}


long Goldness(Image<unsigned char>& I)
{
   unsigned char r, g, b, i, j, k, ni, nj, nk;
   short NoPixels, NoLines;
   short p, l, R[N], l_star, a_star, b_star, V;
   long GoldPixels = 0;
   float  t1, t2, t3, t4, w0, w1, w2, w3, w4, w5, w6, w7;
   float F, r1, r2, r3, cr1, cr2, cr3;
```

```
for(i = 0; i < N; i++) R[i]= 8 * i; R[N-1] = 255;

NoPixels = I.Get_NoPixels();
NoLines = I.Get_NoLines();

for(l = 1; l <= NoLines; l++){
  for(p = 1; p <= NoPixels; p++){

        r = *I.Pixel(p, l, 1);
        g = *I.Pixel(p, l, 2);
        b = *I.Pixel(p, l, 3);

        i = r >> 3;
        j = g >> 3;
        k = b >> 3;

        ni = i + 1;
        nj = j + 1;
        nk = k + 1;

        r1 = (float) (r - R[i]) / (float) (R[ni] -
R[i]);
        r2 = (float) (g - R[j]) / (float) (R[nj] -
R[j]);
        r3 = (float) (b - R[k]) / (float) (R[nk] -
R[k]);

        cr1 = (1 - r1);
        cr2 = (1 - r2);
        cr3 = (1 - r3);

        t1 = cr1 * cr2;
        t2 = cr1 * r2;
        t3 = r1 * cr2;
        t4 = r1 * r2;

        w7 = t4 * r3;
        w6 = t4 - w7;
        w5 = t3 * r3;
        w4 = t3 - w5;
        w3 = t2 * r3;
        w2 = t2 - w3;
        w1 = t1 * r3;
        w0 = t1 - w1;

        l_star =
            + C[i][j][k]   * w0 + C[i][j][nk]   * w1
            + C[i][nj][k]  * w2 + C[i][nj][nk]  * w3
```

```
                + C[ni][j][k]   * w4 + C[ni][j][nk]   * w5
                + C[ni][nj][k]  * w6 + C[ni][nj][nk]  * w7;

        a_star =
            + M[i][j][k]    * w0 + M[i][j][nk]    * w1
            + M[i][nj][k]   * w2 + M[i][nj][nk]   * w3
            + M[ni][j][k]   * w4 + M[ni][j][nk]   * w5
            + M[ni][nj][k]  * w6 + M[ni][nj][nk]  * w7;

        b_star =
            + Y[i][j][k]    * w0 + Y[i][j][nk]    * w1
            + Y[i][nj][k]   * w2 + Y[i][nj][nk]   * w3
            + Y[ni][j][k]   * w4 + Y[ni][j][nk]   * w5
            + Y[ni][nj][k]  * w6 + Y[ni][nj][nk]  * w7;

        V = 255 - (ABS(a_star - a_target) + ABS(b_star -
b_target)
            + ABS(l_star - l_target));

        if(V >= GoldPixelValue) GoldPixels++;

        *I.Pixel(p, l, 1) = MAX(V, 0);
        *I.Pixel(p, l, 2) = *I.Pixel(p, l, 1);
    }}

    return GoldPixels;
}


long Candidate(Image<unsigned char>& I)
{
    short NoPixels, NoLines, p, l, p_end, l_end;
    short Width, Height, Pixels;
    long CandidatePixels = 0, Count;
    Image<unsigned char> *I_cut;

    p_end = I.Get_NoPixels() - TemplateWidth + 1;
    l_end = I.Get_NoLines() - TemplateHeight + 1;

    Width = 2 * TemplateWidth;
    Height = 2 * TemplateHeight;
    Pixels = TemplateWidth * TemplateHeight;

    for(l = 1; l <= l_end; l += TemplateWidth){
      for(p = 1; p <= p_end; p += TemplateHeight){

        I_cut = &I.Cut(p, l, Width, Height);
```

```
        Count = I_cut->Pixels_Greater_Than(GoldPixelValue
- 1, 1);

        if(Count >= MinGoldPixels){
            I.Set(255, p, p + TemplateWidth - 1, 1, 1 +
TemplateHeight - 1, 3);
            CandidatePixels += Pixels;
          }
        else
            I.Set(0, p, p + TemplateWidth - 1, 1, 1 +
TemplateHeight - 1, 3);

        delete I_cut;
      }}

    return CandidatePixels;
}


short Match(Image<unsigned char>& I, Image<unsigned
char>& Template, short FirstPixel, short FirstLine)
{
    short k, l;
    Iterator<unsigned char> A(&Template), B(&I);

    for(k = 0; k < MaxZones; k++) ZoneCount[k] = 0;

    FirstLine--;

    for(l = 1; l <= TemplateHeight; l++){
      B.Cur = I.Pixel(FirstPixel, l + FirstLine, 1);
      A.Set_Limits(l, 1);
      for(A.Cur = A.Beg; A.Cur <= A.End; A.Next_Pixel(),
B.Next_Pixel()){
          ZoneCount[*A.Cur] += *B.Cur;
      }}

    for(k = 0; k < MaxZones; k++) ZoneGoldness[k] =
ZoneCount[k] / ZonePixels[k];

    if(ZoneGoldness[1] < ZoneSetpoint[1]) return 0;
    if(ZoneGoldness[3] < ZoneSetpoint[3]) return 0;
    if(ZoneGoldness[1] - ZoneGoldness[0] <
ZoneSetpoint[0]) return 0;
    if(ZoneGoldness[1] - ZoneGoldness[2] <
ZoneSetpoint[2]) return 0;
    if(ZoneGoldness[3] - ZoneGoldness[4] <
ZoneSetpoint[4]) return 0;
```

```
    return 1;
}


void Read_LUT(char *Name)
{
    short i, j, k;
    ifstream LUT3D;

    LUT3D.open(Name);
    if(!LUT3D) Error("Read_LUT()- 3D LUT file not
opened.");
    for(i=0;i<N;i++) for(j=0;j<N;j++) for(k=0;k<N;k++) {
      LUT3D >> C[i][j][k] >> M[i][j][k] >> Y[i][j][k];
    }
    LUT3D.close();
}
```

The above code will provide a "1" output if a symbol is detected and a "0" output if the symbol is not detected. The output form the code is then used to disable the copy function in, for example, a printer or copier if copyright material is to be controlled. The actual implementation of the hardware and or software for performing this task is well within the art and would vary according to the type of copy system that needed to be controlled. For that reason no specific details are given for performing such control.

The invention has been described with reference to a preferred embodiment; However, it will be appreciated that variations and modifications can be effected by a person of ordinary skill in the art without departing from the scope of the invention.

**Parts List:**

| | |
|---|---|
| 10 | copyright symbol |
| 12 | photographic print |
| 20 | scanner |
| 22 | central processor |
| 24 | monitor |
| 26 | printer |
| 52 | hot foil stamp |
| 54 | projected copyright symbol |
| 56 | gold colored foil |
| 58 | plastic sheet backing |

**Claims**

1. A method for determining the presence of a color symbol on a document with the determination being usable in a copy system for controlling the copying of the document, comprising the steps of:

    a) incorporating a color symbol having a selected color in a document that is not to be copied;
    b) computing the selected color content of the document; and
    c) determining the presence of the color symbol on a document by the amount of the selected color content on the document.

2. A method for determining the presence of a symbol on a document with the determination being usable in a copy system for controlling the copying of the document, comprising the steps of:

a) incorporating a color symbol having a selected color and shape in a document that is not to be copied;

b) digitizing the document and the incorporating color symbol;

c) computing the selected color content of the digitized document; and

d) determining the presence of a color symbol on the document by matching the degree of the selected color on the digitized document with the shape of the selected color symbol.

3. The method according to Claim 2 wherein the color symbol is applied to the document by heating a colored foil and pressing the foil onto the document with a stamp having the shape of the selected color symbol.

4. The method according to Claim 2 wherein the color symbol is shaped as a copyright symbol.

5. The method according to Claim 2 wherein the selected color of the symbol is gold or silver.

6. The method of Claim 2 wherein the presence of a color symbol is determined by averaging the occurrences of the selected color over individual regions representative of the symbol.

7. The method according to Claim 6 wherein the individual regions are selected by overlaying a bit map of the regions.

FIG. 1

FIG. 2

FIG. 3

```
0 0 0 0 0 0 0 0 0 0 0 0 0 0 0 0 0 0 0 0 0 0
0 0 0 0 0 0 0 0 0 0 0 0 0 0 0 0 0 0 0 0 0 0
0 0 0 0 0 0 0 0 1 1 1 1 1 1 0 0 0 0 0 0 0 0
0 0 0 0 0 0 1 1 1 1 1 1 1 1 1 1 0 0 0 0 0 0
0 0 0 0 0 1 1 1 1 1 1 1 1 1 1 1 1 0 0 0 0 0
0 0 0 0 1 1 1 1 2 2 2 2 1 1 1 1 0 0 0 0
0 0 0 1 1 1 1 2 2 2 2 2 2 1 1 1 1 0 0 0
0 0 0 1 1 1 2 2 2 3 3 3 3 2 2 2 1 1 1 0 0 0
0 0 1 1 1 1 2 2 3 3 3 3 3 3 2 2 1 1 1 1 0 0
0 0 1 1 1 2 2 3 3 3 3 3 3 3 3 2 2 1 1 1 0 0
0 0 1 1 1 2 2 3 3 3 4 4 3 3 3 2 2 1 1 1 0 0
0 0 1 1 1 2 2 3 3 3 4 4 3 3 3 2 2 1 1 1 0 0
0 0 1 1 1 2 2 3 3 3 3 3 3 3 3 2 2 1 1 1 0 0
0 0 1 1 1 1 2 2 3 3 3 3 3 3 2 2 1 1 1 1 0 0
0 0 0 1 1 1 2 2 2 3 3 3 3 2 2 2 1 1 0 0 0
0 0 0 1 1 1 1 2 2 2 2 2 2 1 1 1 1 0 0 0
0 0 0 0 1 1 1 1 2 2 2 2 1 1 1 1 0 0 0 0
0 0 0 0 0 1 1 1 1 1 1 1 1 1 1 1 1 0 0 0 0 0
0 0 0 0 0 0 1 1 1 1 1 1 1 1 1 1 0 0 0 0 0 0
0 0 0 0 0 0 0 0 1 1 1 1 1 1 0 0 0 0 0 0 0 0
0 0 0 0 0 0 0 0 0 0 0 0 0 0 0 0 0 0 0 0 0 0
0 0 0 0 0 0 0 0 0 0 0 0 0 0 0 0 0 0 0 0 0 0
```

FIG. 4

EP 0 766 449 A2

FIG. 5

18